# EUROPEAN PATENT APPLICATION

(11) **EP 2 743 029 A1**
(43) Date of publication of application: **18.06.2014**
(21) Application number: 12196491.0
(22) Date of filing: 11.12.2012
(51) Int. Cl.: B23P 19/04, B60P 3/14, B27M 3/00

(54) **Pallet recycling device**

(71) Applicant: Jointec AB, 296 35 Ahus (SE)
(72) Inventor: Berg, Karl-Johan, 296 38 Åhus (SE)
(74) Representative: Hjalmarsson, Magnus Axel

(57) **Abstract**

The present invention relates to a pallet recycling device (16) comprising a pallet dismantler (78) having means (81, 82) for dismantling a pallet, and a multiple-axle robot (76) which is arranged to feed a pallet (20, 24) into and out of the pallet dismantler (78) and to position the pallet (20, 24) in relation to the means (81, 82) for dismantling a pallet. The pallet recycling device (16) comprises a platform (44) for being arranged at a vehicle (1), wherein the platform (44) has a first end portion (46) and a second end portion (48), wherein the pallet dismantler (78) and the multiple-axle robot (76) are arranged at said first end portion (46) of the platform (44), and wherein pallet assembling equipments (94) are arranged at said second end portion (48) of the platform (44).

## Description

### Technical field

The present invention relates to a pallet recycling device comprising a pallet dismantler having means for dismantling a pallet, and a multiple-axle robot which is arranged to feed a pallet into and out from the pallet dismantler and to position the pallet in relation to the means for dismantling a pallet.

### Background

A pallet is a support structure typically constructed from wooden boards fastened together to form a framework that is useful for transporting and/or storing goods. Pallets may be reused several times before they are worn-out. A partly broken pallet may be repaired by dismantling and removing the broken portions of the pallet. WO 2012/06758 discloses a dismantling device and a robot for automatic dismantling of partly broken pallets.

A dismantled pallet may be equipped with spare parts that are nailed to the dismantled pallet. US 6 386 372 disclose a process for recycling pallets by dismantling and replacing damaged portions of pallets. In the process shown in US 6 386 372 broken pallets are fed into the process and repaired pallets come out from the process. A disadvantage with the repair process shown in US 6 386 372 is that the damaged pallets must be transported to the recycling site and that the repaired pallets must be transported from the site. Thus, tons of empty pallets are transported back and forth to the pallet recycling site. Transports are expensive and may have a negative environmental impact.

It is known to use a portable pallet dismantler to be able to move the pallet dismantler instead of the pallets. US 4 112 578 discloses a portable pallet dismantler. Also the dismantler disclosed in WO 2012/067581 may be arranged in a container and thus be portable. A problem with portable pallet dismantlers, such as the ones disclosed in US 4 112 578 and WO 2012/067581, is that in order for the pallet dismantlers to be arranged in a recycling process it is necessary to manually fed pallets in and out from the dismantler and to manually repair the dismantled pallet. Alternatively, the pallet dismantlers shown in US 4 112 578 and WO 2012/067581 depend on a site provided with equipment for feeding and repairing pallets.

Thus, there is a need for a pallet recycling device that lowers transport costs and environmental impact, and that provides an effective pallet recycling process that minimizes manual operations.

### Summary of invention

According to a first aspect, the inventive concept relates to a pallet recycling device comprising a pallet dismantler having means for dismantling a pallet, and a multiple-axle robot which is arranged to feed a pallet into and out of the pallet dismantler and to position the pallet in relation to said means for dismantling a pallet, wherein the pallet recycling device comprises a platform for being arranged at a vehicle, wherein the platform has a first end portion and a second end portion, wherein the pallet dismantler and the multiple-axle robot are arranged at the first end portion of the platform, and wherein pallet assembling equipments are arranged at the second end portion of the platform.

The first and second end portions of the platform are different end portions of the platform along the lengthwise extension of the platform. Thus, the first and second end portions are arranged at different, and opposite, ends of the platform. However, the first and second end portions are not limited to the mere ends of the platform. Rather, the first and second end portions may comprise a substantial portion of the surface of the platform, or even the entire platform.

The means for dismantling a pallet may be knives arranged at the pallet dismantler, or any other equipment suitable for dismantling a pallet. The pallet assembling equipments may be a nail gun, or any other equipment suitable for assembling a pallet.

The platform may for instance be a platform container, i.e. a support frame which is suitable for being arranged on a truck trailer. The platform may alternatively be a truck trailer, i.e. the pallet recycling device may be arranged directly on a truck trailer. The platform may also be arranged in a container suitable for being moved by a train or ship. The lengthwise extension of the platform corresponds to the lengthwise extension of the truck trailer or container, when the platform is arranged at a truck trailer or in a container. A common truck trailer or a container has a lengthwise extension along the normal driving direction of the vehicle when the trailer or container is arranged at a vehicle such as a truck or a train.

The pallet recycling device according to the present invention enables supply of a pallet recycling device as a complete unit, a so-called factory in a box. By "factory in a box" is meant a mobile factory that fit in a standard shipping container and that repair pallets on-site. Thus, damaged pallets are fed into the pallet recycling device, i.e. the factory in a box, and complete pallets are returned from the pallet recycling device. A portable pallet recycling device allows pallets to be dismantled and reassembled directly at the site where pallets are used so that the recycled pallets may be used directly without further transport. Costs are saved since it is cheaper to transport the pallet recycling device to a site where it is needed a certain period of time, and thereafter transport the pallet recycling device to another site, than to transport damaged pallets back and forth to a stationary pallet recycling device.

In particular the portable pallet recycling device is useful at sites where used pallets are abandon and new pallets are needed, such as at warehouses. The portable pallet recycling device may frequently visit such sites for dismantling and reassembling used pallets. Thus, there is no need to transport away defect pallets for renovation and the need for ordering new pallets is reduced.

Since modern pallets dismantlers, or pallets recycling processes, have a large capacity, a stationary pallet recycling device may be out of work rather fast at most warehouses. With the pallet recycling device according to the present invention, the pallet recycling device may easily be moved to another site when out of work.

Preferably, the pallet recycling device comprises an infeed path for feeding pallets to the robot, wherein the infeed path is arranged in the second end portion of the platform. By infeed path is meant a forwarding route, or route of transport, for pallets that are fed into the pallet recycling device, or from one position in the pallet recycling device to another position in the pallet recycling device. The infeed path may be a convenor, such as a roller convenor, or a track for guiding and/or moving pallets. Thus, an infeed path gives a predetermined path of movement of pallets that are fed to the robot.

Preferably, the pallet recycling device comprises an outfeed path for feeding dismantled pallets from the robot, wherein the outfeed path is arranged in said second end portion of the platform. By outfeed path is meant a forwarding route, or route of transport, for pallets that are fed out from the pallet recycling device, or from one position in the pallet recycling device to another position in the pallet recycling device. The outfeed path may be a convenor, such as a roller convenor, or a track for guiding and/or moving pallets. Thus, an outfeed path gives a predetermined path of movement of pallets that are fed to the robot. Further, if the outfeed path is arranged in the same portion of the platform as the infeed path, pallets may be fed into and out from the pallet recycling device at the same portion of the platform. Having the outfeed path and the infeed path in the same portion of the platform may facilitate handling of damaged pallets and recycled pallets, for instance by a fork lifter. Thus, one and the same fork lifter may be used for handling damaged pallets that should be arranged at the infeed path and recycled pallets that are arranged on the outfeed path.

Preferably, at least a portion of the outfeed path is arranged in parallel with the infeed path. It is possible that the infeed path and the outfeed path are at least partially arranged vertically above each other. Such arrangements may save space on the platform. It may be preferred that the infeed path is arranged vertically below the outfeed path. It may be easier for an operator to handle a pallet on the outfeed path if the outfeed path is the upper path.

In addition, the vertical level of at least one of the infeed path and the outfeed path may be adjustable. Thus it may be possible to adjust the level of the outfeed path to the length of the operator. If the outfeed path is adjustable it may be easier for the operator to handle the dismantled pallet, for instance if the operator should nail a loose pallet part. If the infeed path is adjustable it may be easier for the operator to visually control a pallet that should be dismantled.

Preferably, the first end portion is a front portion of the platform and the second end portion is a rear portion of the platform, as seen in a normal driving direction of the vehicle when the platform is arranged at the vehicle. An advantage of having the infeed path and/or the outfeed path located rear of the dismantling device is that broken pallets may be supplied from the rear end of the trailer and recycled pallets may be outputted from the rear end of the trailer. Thus, by backing the trailer up to a loading platform the supply and/or output of pallet may be easily handled by for instance a forklift on the loading platform. In addition, having the dismantling device arranged at a front portion of the trailer allows dismantled portions, i.e. waste material, to be removed at the front portion of the trailer. Therefore it is avoided that the waste material is mixed up with or obstructing the feed of damaged pallets and/or output of recycled pallets.

In addition, the robot may be arranged to hold a pallet in a position for visual inspection of the pallet before the pallet is moved to the pallet dismantler. An operator of the pallet recycling device may thus easily inspect the status of the pallet without having to manually grab or lift the pallet.

According to a second aspect, the inventive concept relates to a vehicle comprising a pallet recycling device according to anyone of the above described embodiments.

According to a third aspect, the inventive concept relates to a method for recycling pallets on a platform which is arrangable on a vehicle. By *arrangable* is meant that the platform is *suitable for being arranged* on a vehicle. The method comprises feeding a pallet along an infeed path on the platform; moving the pallet to a pallet dismantler on the platform; dismantling the pallet by means of the pallet dismantler; moving the pallet from the pallet dismantler to an assembling station, and; assembling the pallet at the assembling station. It is possible that the direction of motion of a pallet on the infeed path is reverse to the direction of motion of a pallet on the outfeed path.

In addition, the method may comprise arranging the pallet in an inspection position by means of a multi-axis robot; and inspecting the pallet to decide what pallet portions to be dismantled. Further, the method may comprise entering a pallet through a pallet inlet at the platform, wherein the pallet inlet is arranged in one end portion of the platform. Further, the method may comprise discharging a pallet through a pallet outlet arranged in one end portion of the platform.

Preferably, pallet inlet and pallet outlet are arranged in the same and portion of the trailer. Preferably the end portion is the rear end portion of the trailer. The trailer may be arranged with the rear portion of the trailer at a loading platform and pallets may easily be fed in and out from the trailer using for instance a fork lift truck. Thus, one robot may handle a pallet both during insertion of the pallet in the dismantler and during inspection of the pallet prior to dismantling.

In one embodiment of the present invention the pallet recycling device the length of the platform is between 16 and 7 meter. Preferably the length of the platform is between 14 and 10 metre, and more preferably the length of the platform is between 13.5 and 12 metre.

The pallet dismantler and the multiple-axle robot, which are arranged at the first end portion of the platform, occupy between 8 and 3 meter of the length of the platform. In one embodiment a pallet inlet magazine and a pallet outlet magazine are arranged side-by-side in the second end portion of the platform. The pallet inlet magazine and a pallet outlet magazine occupy between 1 and 3 meter of the length of the platform.

### Brief description of the drawings

The invention will now be described in more detail with reference to the appended drawings in which:
Fig. 1 is a side view showing a truck and a truck trailer;
Fig. 2 is a perspective view showing the truck trailer in Fig. 1 and a pallet recycling device arranged on the truck trailer;
Figs 3a-g show, schematically, portions of the pallet recycling device in Fig. 2;
Fig. 4 shows portions of the pallet recycling device in Fig. 2; and
Fig. 5 shows a pallet of EUR type.

### Detailed description

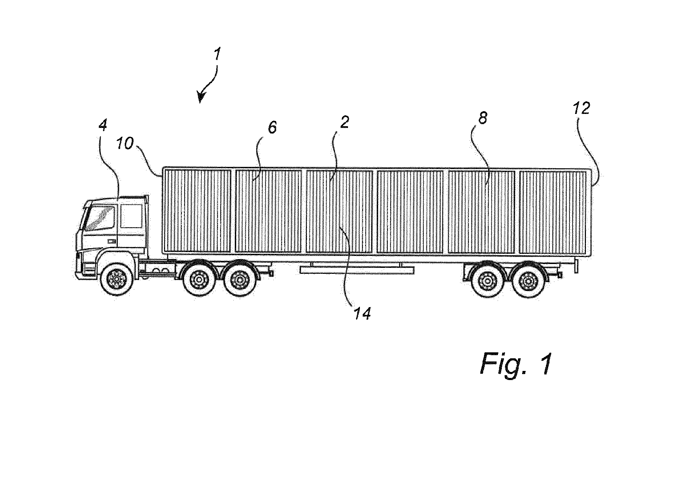

Fig. 1 shows a vehicle 1 in form of a truck trailer 2 arranged at a truck 4. In most part of this description the vehicle 1 will be referred to as truck trailer 2, or just trailer 2. The trailer 2 has a first end portion 6 and a second end portion 8. In the embodiment of the present invention illustrated here the first end portion 6 is the front portion of the trailer 2 and the second end portion 8 is the rear end portion of the trailer 2, as seen in the normal driving direction of the trailer 2 when arranged at the truck 4. The first end portion 6 will hereinafter be referred to as the front portion 6 of the trailer 2, and the second end portion 8 will hereinafter be referred to as the rear portion 8 of the trailer 2. The short sides of the trailer 2, i.e. the actual ends of the trailer 2, will be referred to as front end side 10 and rear end side 12, respectively. The sides of the trailer 2 are referred to as long sides 14, 15. Thus, the long sides 14, 15 follow the normal driving direction of the trailer 2 when arranged at the truck 4.

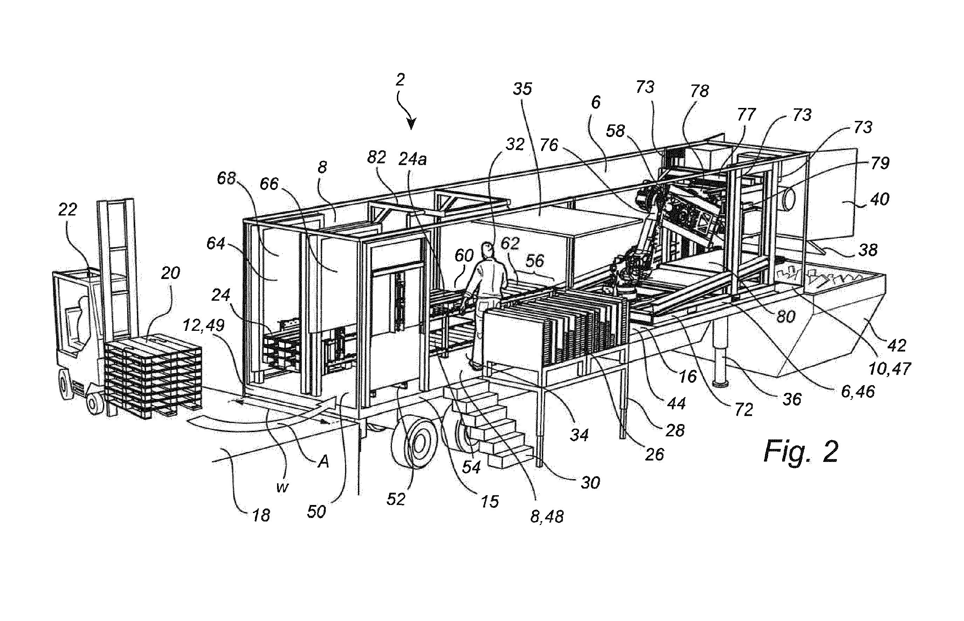

Fig. 2 shows the trailer 2 described in connection with Fig. 1, and a pallet recycling device 16 arranged on the trailer 2. Fig. 2 is intended to show an overview of the pallet recycling device 16. For clarity purposes some portions of the trailer 2, such as most of the side walls and the roof of the trailer 2, are not shown in Fig. 2. The trailer 2 in Fig. 2 is arranged in a position for recycling pallets 20, i.e. the trailer 2 is illustrated as parked at a stationary loading dock 18 having the trailer rear end side 12 towards the loading dock 18. The rear end side 12 of the trailer 2 has been opened up to allow pallets 20, 24 to be fed into and out from the rear end side 12 of the trailer 2. A fork lifter 22, or any other suitable pallet handling equipment, may be used at the loading dock 18 to feed damaged pallets 20 into the pallet recycling device 16 and pick up complete, repaired pallets 24.

A spare parts storage 26 is arranged on a stand 28 at the rear end portion 8 of the trailer 2, along the right long side 15 of the trailer 2. When the trailer 2 with the pallet recycling device 16 is to be transported, the spare parts storage 26 can be moved into the trailer 2. The stand 28 may be detachably or hinged to the trailer 2 and may be raised or folded into the trailer 2 during transportation. A flight of stairs 30, also detachably or hinged to the trailer 2, is arranged at the rear end portion 8 of the trailer 2 along the right long side 15 of the trailer 2. The flight of stairs 30 allows an operator 32 of the pallet recycling device 16 to easily enter and exit a manual working area 34 of the pallet recycling device 16. A trailer side wall member 35 is hinged at the trailer roof (hinge and roof are not shown) and may be arranged as a roof over the spare parts storage 26 when the trailer 2 is parked in a position for recycling pallets 20, as shown in Fig. 2. Further, the front end portion 6 of the trailer 2 is arranged on supports 36. Doors 38, 40 at the front end side 10 are arranged in an open position, and a container 42 is arranged in front of the front end side 10 of the trailer 2.

The entire pallet recycling device 16 is arranged on a common platform 44. In the embodiment illustrated here the platform 44 is the floor of the trailer 2, however the platform 44 may alternatively be a container or any other platform which is suitable for being arranged at a vehicle. The platform 44 has a first end portion 46 and a second end portion 46. In the embodiment illustrated here, the platform 44 will also be described by refereeing to the front and rear end portions of the trailer 2. In other words, the first end portion 46 of the platform 44 is also referred to as front end portion 46 of the platform 44, and the second end portion 48 of the platform 44 is also referred to as rear end portion 48 of the platform 44. Further, the front end side 10 and the rear end side 12, respectively, of the trailer 2 correspond to short sides 47, 49 of the platform 44.

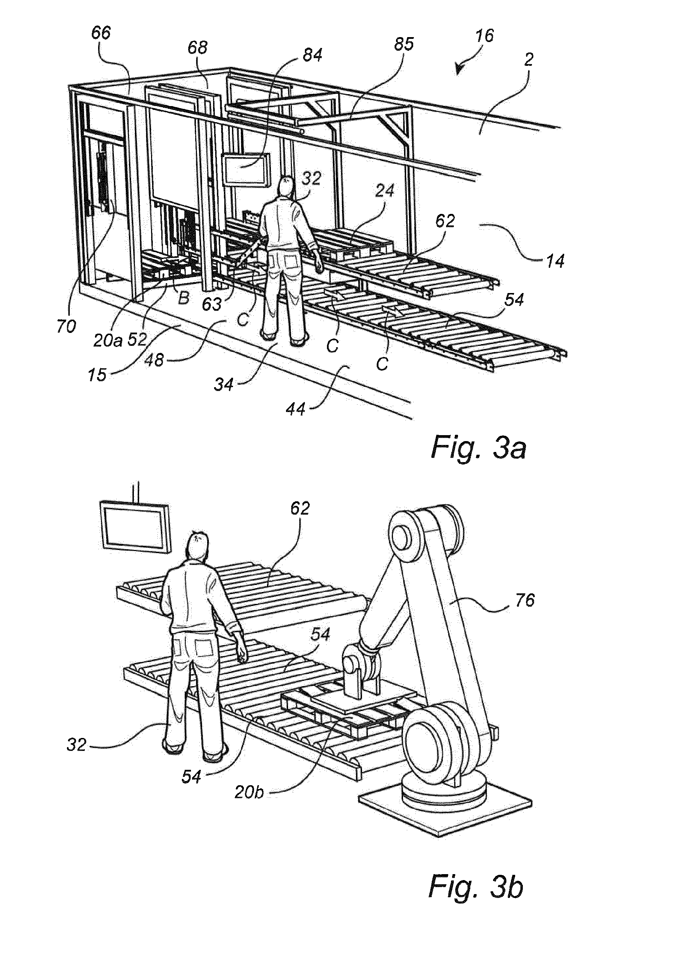

The pallet recycling device 16 shown in Fig. 2 will be described as comprising eight portions or stations: a pallet inlet 50, a cross conveyor 52, an infeed path 54, a pallet inspection station 56, a pallet dismantling station 58, a pallet assembling station 60, an outfeed path 62, and a pallet outlet 64. Fig. 2 shows an overview of the pallet recycling device 16 with the eight stations 50, 52, 54, 56, 58, 60, 62, 64. Figs 3a-g show the stations 50, 52, 54, 56, 58, 60, 62, 64 in closer up views and are used to illustrate the operation of the pallet recycling device 16 in more detail.

The pallet inlet 50 and the pallet outlet 64 are arranged at the rear end side 12 of the trailer 2, i.e. at the rear end side 49 of the platform 44. An inlet magazine 66 is arranged at the pallet inlet 50 and the fork lifter 22 may be used to place a pile of damaged pallets 20 in the inlet magazine 66. Further, the fork lifter 22 may pick up a pile of recycled pallets 24 from an outlet magazine 68 arranged at the pallet outlet 64. As seen in Fig. 2 the inlet magazine 66 is arranged to the right hand side, and the outlet magazine 68 is arranged at the left hand side, at the rear end side 12 of the trailer 2. In Fig. 2 the fork lifter 22 is illustrated as carrying a pile of broken pallets 20 which are to be inserted in the inlet magazine 66, at the pallet inlet 50, which is illustrated by an arrow A.

In Fig. 2 the width of the trailer 2 is marked with *w*. About half of the width *w* of the trailer 2, at the rear end side 12 of the trailer, is occupied by the pallet inlet magazine 66, and the other half is occupied by the pallet outlet magazine 68. In an alternative embodiment the pallet inlet magazine 66 and/or the pallet outlet magazine 68 may occupy between ¼ and ¾ of the width *w* of the trailer rear end side 12. Preferably the pallet inlet magazine 66 and/or the pallet outlet magazine 68 occupy between ⅓ and 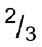 the width *w* of the trailer rear end side 12, and more preferably the pallet inlet magazine 66 and/or the pallet outlet magazine 68 occupy between ⅓ and ½ of the width *w* of the trailer rear end side 12. A common trailer width *w*, and thus a suitable width of the platform, is about 2.60 metre. Preferably the width *w* of the platform is between 3.6 and 1.5 metre, preferably between 3.0 and 2.0 meter.

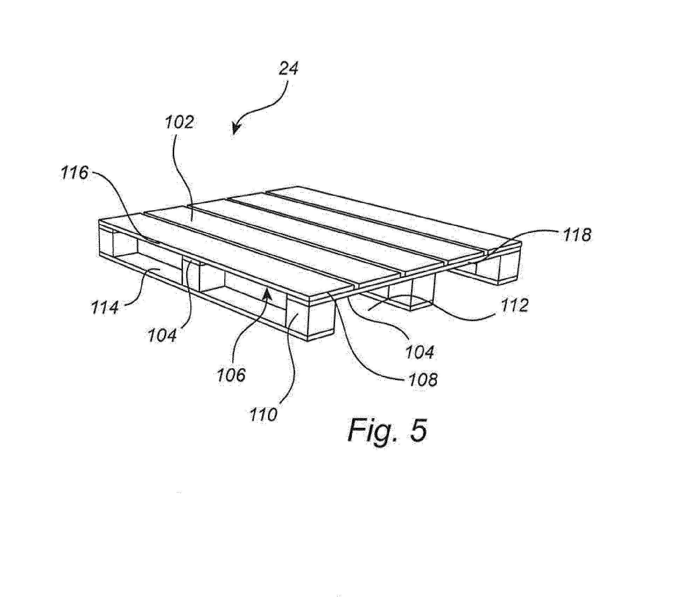

As is seen in Fig. 2, pallets 20, 24 are arranged to be fed in and out from the trailer 2 having the short side of the pallets 20, 24 (see Fig. 5 below) aligned with the short side of the trailer 2. The inlet and outlet magazines 48, 50 are arranged side-by-side at the rear end side 12 of the trailer 2. Pallets 20, 24 piled in the inlet and outlet magazines 66, 68 are arranged with the pallet long sides (see Fig. 5 below) aligned with the long sides 14, 15 of the trailer 2. The fork lifter 22 may therefore easily access the pallets 20, 24 in the inlet and outlet magazines 66, 68. The pallet inlet 50 further comprises a piling down device 70 arranged in the inlet magazine 66. The piling down device 70 allows a pallet 24a to be separated from the pile of pallets in the inlet magazine 66 and to be forwarded to the infeed path 54 via the cross conveyor 52. The cross conveyor 52 is not shown but only indicated in Fig. 2. The cross conveyor 52 and the piling down device 70 will be described in more detail with reference to Fig. 3a below.

Continuing with describing to Fig. 2, the infeed path 54 comprises a roller conveyor 74 arranged close to the trailer floor, e.g. close to the platform 44. In the embodiment shown here the infeed path 54 is arranged along the left long side 14 of the trailer 2 and platform 44. The roller conveyor 74 forwards the pallet 20 to the pallet inspection station 56, which will be described in connection to Figs 3b-c below.

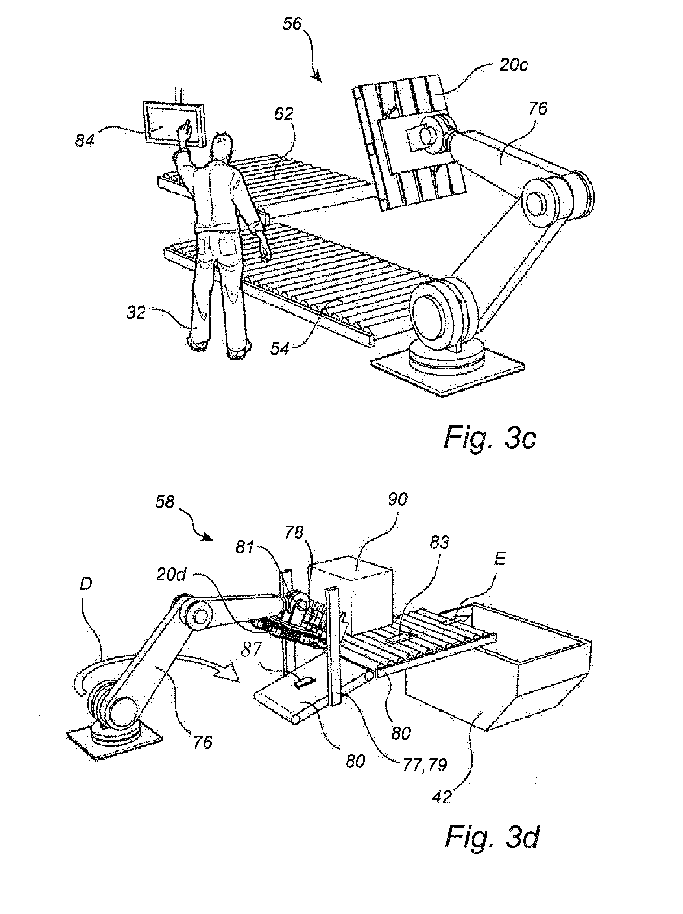

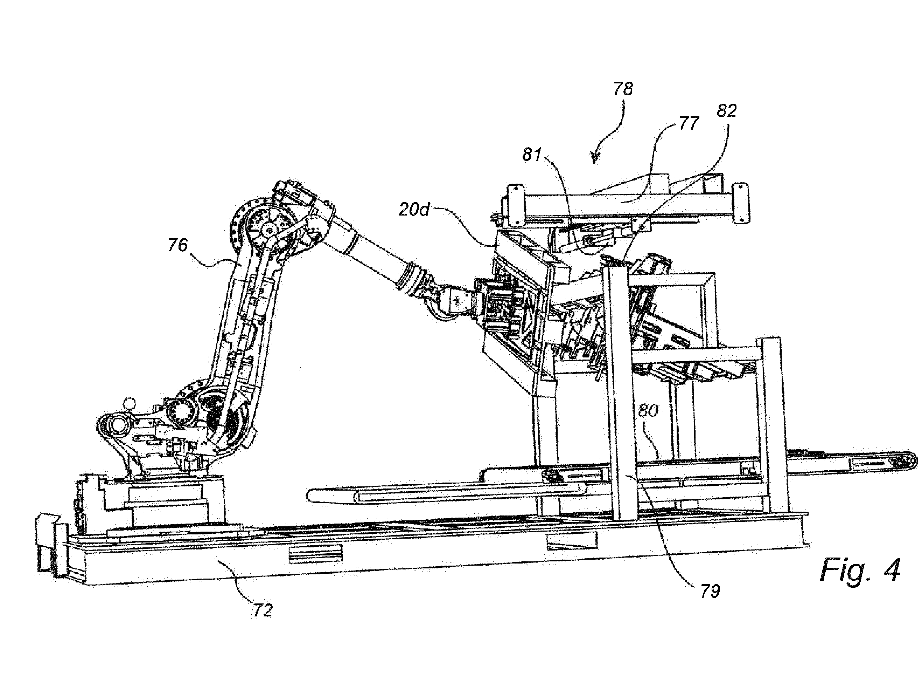

Further, Fig. 2 shows a multiple-axle robot 76 and a pallet dismantler 78 arranged on a support frame 72 in the front end portion 46 of the platform 44. The support frame 72 is attached to the platform 44, i.e. in this case the support frame 72 attached to floor of the trailer 2. The support frame 72 comprises vertical support beams 73 that hold a lower dismantler frame 77 and an upper dismantler frame 79. The dismantler frames 77, 79 will be further described with reference to Fig. 4 below. The multiple-axle robot 76 will be further described in connection to Figs 3b-e below. The pallet dismantler 78 will be further described in connection to Fig. 3d.

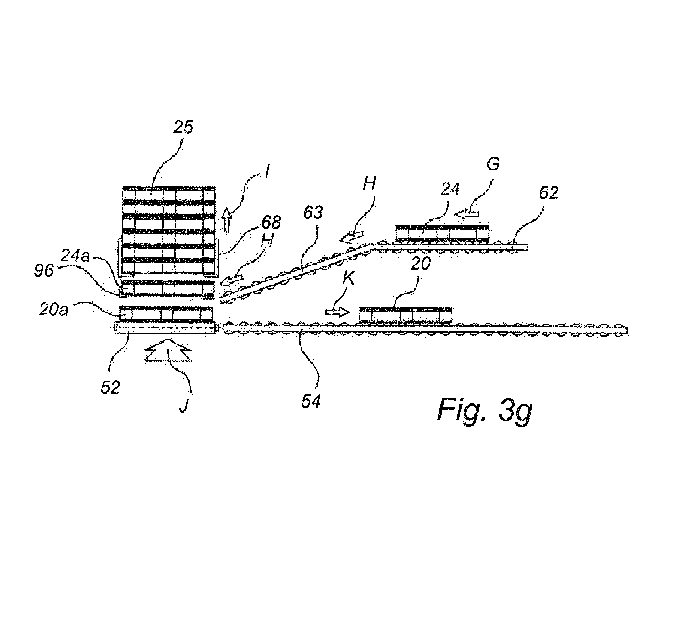

The outfeed path 62 is arranged vertically above the infeed path 54, i.e. in the rear end portion 48 of the platform 44 and trailer 2, and along the left long side 14 of the trailer 2. The outfeed path 62 comprises a roller conveyor 82 of same kind as the infeed path 54. A pallet 24a on the outfeed path 62 is fed in a reverse direction with respect to the direction of a pallet (see Fig. 3g) which is fed along the infeed path 54. In the embodiment shown here, the feed direction at the infeed path 54 corresponds to the normal driving direction of the trailer 2 when arranged on a truck 4. Thus, a pallet 24a at the outfeed path 62 is fed in a direction with corresponds to a direction reverse to the normal driving direction of the trailer 2 when arranged on a truck 4.

Since the infeed path 54 and the outfeed path 62 are arranged vertically above each other along the left long side 14 of the trailer 2, space is provided for the operator 32 at the manual working area 34 along the right long side 15 of the trailer 2. Thus, the manual working area 34 is located along the infeed and outfeed paths 54, 62. As is seen in Fig. 2, the manual working area 34 is located at the rear end portion 48 of the platform 44, however if necessary it is possible for the operator 32 to also access the front end portion 46 of the platform 44, i.e. where the pallet dismantler 78 and the robot 76 are arranged.

In Fig. 2 the robot 76 holds a pallet 20d during dismantling using the dismantler 78. A conveyor belt 80 is arranged below the pallet dismantler 78, i.e. in the front end portion 46 of the platform 44. The conveyor belt 80 forwards pallet portions 87 (see Fig. 3d), which are cut away from the pallet 20d by the dismantler 78 as described in connection to Fig. 3d below, to the open container 42 arranged in front of the trailer 2. The lower door 38 at the front end side 10 of the trailer 2 is arranged in an open position to allow dismantled pallet portions to be conveyed to the container 42.

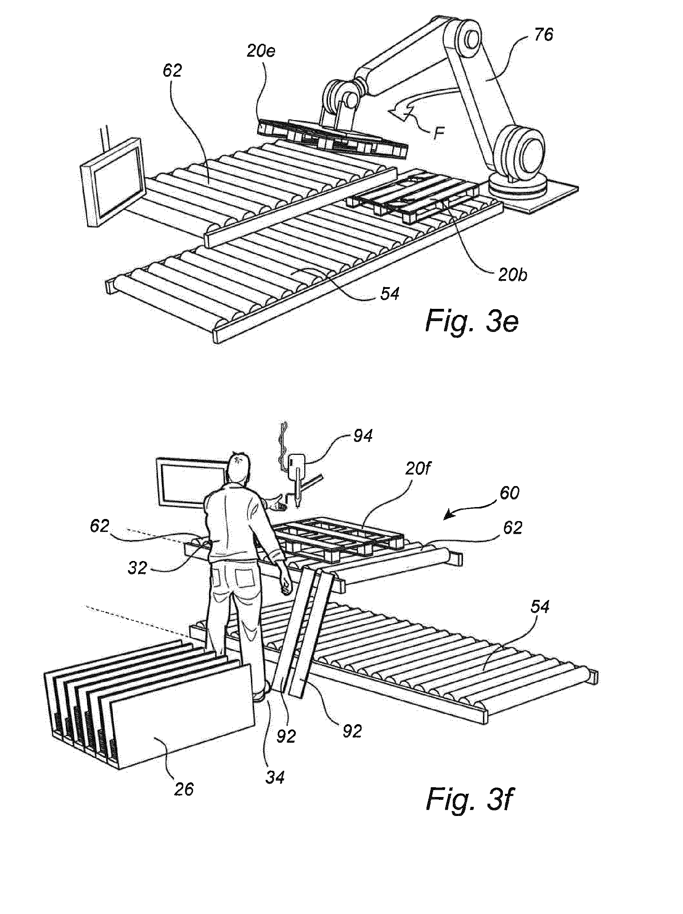

A dismantled pallet 24a is assembled at the assembling station 60, which is arranged along the outfeed path 60, which will be described in connection to Fig. 3f below. The assembling station 60 comprises a stand 82 for a nailing gun (not shown in Fig. 2). Once the dismantled pallet 24a have been repaired by replacing the dismantled portions by spare parts, the pallet 24a is forwarded along the outfeed path 60 to the outlet magazine 68, which is described in connection to Fig. 3g below.

Fig. 3a shows the rear end portion 48 of the platform 44 of the pallet recycling device 16 described in connection to Fig. 2 above. For clarity purposes the spare part storage 26 in not shown in Fig. 3a. A damaged pallet 20a in the inlet magazine 66 has been piled down by the piling down device 70. Normally, a pile of damaged pallets would be located in the inlet magazine 66, but for clarity purposes only one pallet 20 is shown in the inlet magazine 66. The piling down device 70 may be of a kind which is known in the art and commonly used at industries handling pallets. The cross conveyor 52 is arranged below the inlet and outlet magazines 66, 68. Thus a pallet 20a, which have been piled down in the inlet magazine 66 and placed on the cross conveyor 52, is conveyed below the pile of pallets 24 in the outlet magazine 68. An arrow B in Fig. 3a illustrates the direction of motion of the pallet 20a along the cross conveyor 52.

Thus, the cross conveyor 52 allows a damaged pallet 20a, piled down in the inlet magazine 66, to be forwarded from a position right below the inlet magazine 66 to a position right below the outlet magazine 68, and further on to the infeed path 54. In the embodiment illustrated here, the infeed path 54 is arranged along the left long side 14 of the trailer 2, as seen in the normal travelling direction of the trailer 2. In other words, since the inlet magazine 66 is arranged at one side of the trailer 2 (which is here the right side of the trailer) and the infeed path 54 is arranged along the opposite side of the trailer 2 (which is here the left side of the trailer), the cross conveyor 52 allows pallets to be conveyed from one long side 15 to the other long side 14 of the trailer 2. By right side and left side, respectively, of the trailer 2 is meant the right side and left side, respectively, as seen in the normal driving direction of the trailer 2 when arranged at a vehicle.

The arrows C in Fig. 3a show the intended path of the pallet 20a along the infeed path 54. The operator 32, depicted at the manual working area 34 in Fig. 3a, normally do not have to bother about the infeed of pallets, since the piling down device 70, the cross conveyor 52 and the infeed path 54 are automatically operated. Instead the operator 32 can focus on inspecting pallets (see Fig. 3c), and assembling pallets (see Fig. 3f). Fig. 3a further shows a touch screen 84 which is used for forwarding information regarding the status of a damaged pallet to the pallet dismantler 78 and robot 76 (see Figs 3c-d). Alternatively, instead of using the cross conveyor 52 shown here, a robot (not shown) may be used for grabbing a pallet in the inlet magazine and move the pallet to the infeed path, i.e. across the platform.

The infeed path 54 is arranged to feed damaged pallet 20 from the cross conveyor 52 to a position where the damaged pallet 20 may be inspected to decide what portions of the damaged pallet 20 that should be replaced. Roughly, the infeed path 54 occupies about half of the trailer length and slightly less than half of the trailer width.

In addition, Fig. 3a shows the outfeed path 62 of the pallet recycling device 16. The purpose of the outfeed path 62 is to fed a dismantled pallet from the robot 76 (see Fig. 3e), via the assembling station 60 (see Fig. 3f), and further on to the outlet magazine 68. A stand 82 for nailing gun is shown in Fig. 3a, however the nailing gun is not shown in Fig. 3a. The outfeed path 62, as well as the infeed path 54, is horizontal. However the last portion 63 of the outfeed path 62 slopes downwardly towards the outlet magazine 68. A recycled pallet 24 is illustrated on the outfeed path 62 in Fig. 3a.

Fig. 3b shows a damaged pallet 20b which has reached the end of the infeed path 54. The robot 76, which is schematically illustrated, is about to pick up the pallet 20b. The robot 76 is arranged to engage the pallet 20b at the infeed path 54 and to lift the pallet 20b to a position where the operator 32 may inspect the pallet 20b.

Fig. 3c shows the robot 76 of Fig 3b when the robot 76 holds a pallet 20c in an inspection position, which is also referred to as pallet inspection station 56. The pallet 20c shown in Fig. 3c is the same pallet 20b as shown in Fig. 3b, however in Fig. 3c the robot 76 has lifted the pallet 20c from the infeed path 54 to a position where the pallet 20c may be inspected by the operator 32. The robot 76 may turn the pallet 20c such that the operator 32 may inspect all sides of the pallet 20c in order to decide what portions of the pallet 20c that should be dismantled and replaced. Ocular inspection is preferred and often enough, even though it is possible for the operator 32 to tough the pallet 20c at the pallet inspection station 56. The operator 32 forwards information, regarding what pallets portions that should be dismantled, to the robot 76 and/or dismantler 78 via the touch screen 84. In the embodiment shown here the touch screen 84 is arranged hanging from the ceiling (not shown) of the trailer 2 at the manual working area 34. After inspection of the pallet 20c is finished, the robot 76 moves the pallet 20c from the pallet inspection station 56 to the pallet dismantling station 58 (Fig. 3d). Alternatively, if the operator 32 decides that the pallet 20c does not need to be dismantled, the robot 76 may put the pallet directly on the outfeed path 62 without any dismantling action on the pallet.

Fig. 3d shows, schematically, the pallet dismantling station 58. A more detailed view of the pallet dismantling station 58, i.e. of the pallet dismantler 78 and the robot 76, is given with reference to Fig. 4 below. Fig. 3d intends to illustrate that a pallet 20d, which is the same pallet as the pallet 20c shown in Fig. 3c, is moved to the dismantling station 58 using the robot 76. The schematic pallet dismantler 78 shown in Fig. 3d comprises means for dismantling pallets in the form of knives 81 arranged at dismantler frames 77, 79. As will be described in connection to Fig. 4 below the dismantler frames 77, 79 may comprise two separate frames, however in Fig. 3d the frames 77, 79 are only schematically illustrated. The schematically illustrated pallet dismantler 78 shown in Fig. 3d further comprises equipment for running the pallet dismantler 16, such as compressor and electronic control units, etc., which are illustrated schematically with a box 90. An arrow D in Fig. 3d illustrates that the robot 76, holding the pallet 20d, has been turned from the inspection station 56 to reach the dismantling station 58. The conveyor belt 80 arranged below the pallet dismantler 78 feed dismantled pallet portions 83 out of the trailer 2 and into the container 42. An arrow E in Fig. 3d illustrates the direction of motion of the dismantled pallet portions 83 on the conveyor belt 80.

Fig. 3e shows the robot 76 from Fig. 3d placing a dismantled pallet 20e, which is the same pallet 20d in Fig. 3d, on the outfeed path 62. Thus, the pallet 20e shown in Fig. 3e is not complete but some pallet portions have been cut away in the previous dismantling station 58. An arrow F illustrates that the robot 76 have been rotated to forward the pallet 20e from the dismantling station 58 to the outfeed path 62. In addition, Fig. 3e shows a damaged pallet 20b on the infeed path 54. In order for the robot 76 to easily access the pallet 20b on the infeed path 56, the infeed path 56 is about one pallet length longer than the outfeed path 62. As soon as the robot 76 has placed the dismantled pallet 20e on the outfeed path 62, the robot 76 is ready to grab the damaged pallet 20b on the infeed path 56, and the process described in connection with Figs 3b-d is performed with the damaged pallet 20b.

As have been described above and illustrated by Figs 3b-3e, one and the same robot 76 is used for moving a pallet 20b from the infeed path 54 to one or several inspection positions, holding a pallet 20c during inspection of the pallet 20c, moving a pallet 20d from the inspection position to the dismantler 78, holding a pallet 20d during dismantling in one or several dismantling positions in order for one or several particular portions of the pallet 20d to be cut loose, and for moving the dismantled pallet 20e from the dismantler 78 to the outfeed path 62. The robot 76 is a multiple-axle robot, which means that a pallet 20 held by the robot 76 is movable about several different axes.

Fig. 3f shows a pallet 20f in the pallet assembling station 60. The pallet assembling station 60 is arranged along a portion of the outfeed path 62, at the manual working area 34. A dismantled pallet 20f which is fed along the outfeed path 62 is put to a stop and the operator 32 controls which portions of the pallet 20f that are missing. The spare part storage 26, which is arranged at the manual working area 34, opposite to the pallet assembling station 60, allows the operator 32 to easily grab the necessary spare parts 92 from the spare part storage 26 and manually arrange the spare parts 92 at the pallet 20f. The operator 32 nails the spare parts 92 to the pallet 20f using a nail gun 94. The pallet 20f shown in Fig. 3f is forwarded, after being nailed at the assembling station 60 as shown in Fig. 3f, rearward in the trailer, along the outfeed path 62. A pallet leaving the assembling station 60 is a complete recycled pallet, and will be referred to as recycled pallet 24, 24a.

Fig. 3g shows schematically, as seen from the side, one portion of the pallet recycling device 16 described in connection to Fig. 2 above. Fig. 3g shows the last portion 63 of the outfeed path 62, the pallet outlet magazine 68 and a piling up device 96 arranged at the outlet magazine 68. In addition, the infeed path 54 and the cross conveyor 52 are shown in Fig. 3g. A recycled pallet 24 is fed along the outfeed path 62, i.e. towards the left as seen in Fig. 3g. The direction of motion of the recycled pallet 24 on the outfeed path 62, 63 is illustrated by an arrow G. The last portion 63 of the outfeed path 62 slopes downwardly such that the recycled pallet 24 may slide in below the pallet outlet magazine 68, illustrated by arrows H. A recycled pallet 24a is illustrated in the piling up device 96, and is held by the piling up device 96. Once a pallet 24a has slid down the last portion 63 of the outfeed path 62 and reached a position vertically below the outlet magazine 68, the piling up device 96 raises the pallet 24a, illustrated by an arrow I in Fig. 3g, and places the pallet 24a in the lowest position in the pile of pallets 25 arranged in the outlet magazine 68. In other words, the piling up device 96 is used for lifting the recycled pallet 24a upwards and placing it at the lowest position in the pile 25 of recycled pallets in the outlet magazine 68.

As is seen in Fig. 3g, and as was described in connection to Fig. 2 above, the infeed path 54 is located below the outfeed path 62. However the position of the inlet magazine 66 (see Fig. 2) necessitate that a pallet in the in inlet magazine 66 is transported in a transverse direction, across the platform 44, to reach the infeed path 56. An arrow J in Fig. 3g illustrates the direction of motion of a pallet 20a on the cross conveyor 52. Further, an arrow K in Fig. 3g illustrates the direction of motion of a pallet 20 on the infeed path 54. Thus, the direction of motion J of a pallet 20a on the cross conveyor 52 is essentially perpendicular to the direction of motion K of a pallet 20 on the infeed path 54. Further, it is realized that the direction of motion G of a pallet 24 on the outfeed path 62 is reverse to the direction of motion K of a pallet 20 on the infeed path 54.

Fig. 4 shows the robot 76 and the pallet dismantler 78 described in connection to Fig. 2 above. The robot 76 holds a pallet 20d which is about to enter the dismantler 78. The robot 76 and the dismantler 78 operate similar to the robot 76 and the dismantler 78 described in WO 2012/06758. However one difference between the pallet dismantler in WO 2012/06758 and the pallet dismantler 78 of the pallet recycling 16 device shown here is that the dismantler 78 comprises two separate dismantler frames 77, 79. The upper dismantler frame 77 holds one knife 81 and the lower dismantler frame 79 holds three knives 82. The knives 81, 82 are used for dismantling different portions of the pallet 20d. Having a pallet recycling device 16 arranged on a trailer 2 limits the space available for the robot 76 and the dismantler 78. Thus the robot 76 shown here handles pallets at lower heights than what the dismantler shown in WO 2012/06758 is able to. Thus, having the knives 81, 82 arranged on two separate dismantler frames 77, 79 provides increased flexibility and allows the robot 76 to hold the pallet 20d in positions such that several or all portions of the pallet 20d may be reached by the knives 81, 82 even at low working heights.

As was described in connection to Fig. 2 above, the dismantler 78 and the robot 76 are arranged at the support frame 72. The robot 76 is attached directly to the support frame 78 whereas the dismantler 78, i.e. the upper and lower dismantler frames 77, 79 is attached to the support frame 72 via vertical support beams 73, which for clarity purposes are omitted in Fig. 4 but which are seen in Fig. 2 above. Further, the conveyor belt 80 that transports pallet portions cut away from the pallet 20d by the dismantler 78 is shown below the dismantler 78 in Fig. 4.

Fig. 5 shows a pallet 24 of the same kind as the pallets 20, 20a-d, 24, 24a as shown in previous drawings. The pallet 24 has the same basic components as a standard pallet of EUR type. However the pallet recycling device may be suitable for all kinds of pallet. The pallet 24 in Fig. 5 comprises five mutually parallel upper deck boards 102 which are nailed to three mutually parallel stringer boards 104. The stringer boards 104 are arranged perpendicular to the upper deck boards 102. The bottom surfaces 106 of the upper deck boards 102 abut the stringer boards 104 at pallet joints 108.
Blocks 110 are arranged at the pallets joints 108 to allow space 112 between the upper deck boards 102 and three lower deck boards 114. The three lower deck boards 114 are mutually parallel, and arranged in parallel with the upper deck boards 102. The long sides 116 of a pallet 24 are the sides which are parallel to the deck boards 102, 114. The short sides 118 of a pallet 24 are the sides which are parallel to the stringer boards 104.

Nails (not shown) at the pallets joints 108 hold the pallet portions together. Usually, nails are applied to the pallet joints 108 from both sides of the pallet 24, i.e. from the top surface of the upper deck boards 102, as well as from the bottom surfaces of the lower deck boards 114. Thus, a used and partly broken pallet 24 may be dismantled by cutting the nails at some of the pallet joints, which is handled by the previously described pallet dismantler 78.

It is obvious that the above-described embodiments of the pallet recycling device 16 according to the invention can be varied in different ways within the context of the claims. For instance the pallet recycling device 16 may be adapted to optimally fit an intended type of pallet. It is obvious, too, that it is appropriate to let a computer control the entire dismantling process such that the actions of the robot 76, the dismantler 78 and feed of pallets 20, 24 on the in- and outfeed paths 54, 62 are combined in an effective manner.

It has been illustrated inhere that the pallet inlet and outlet 50, 64 are arranged at the rear end of the trailer 2 such that the rear end of the trailer 2 may be arranged at a loading dock 18 and the pallet magazines 66, 68 may easily be accessible by a fork lifter 22. However, it is possible that the pallet inlet and outlet 50, 64 are arranged at the front end of the trailer 2 and that the front end of the trailer 2 is arranged at a loading dock 18, or at any other suitable site. In addition it is also possible to have the pallet magazines 66, 68 arranged at other positions in the trailer. For instance, one or both of the pallet magazines 66, 68 may be arranged at a long side 14, 15 of the trailer 2, such that a lifting device may reach plied pallets from the side of the trailer 2. The conveyors that forward pallets from or to the pallet magazines 66, 68 should then be adapted to be suitable for such positions of the pallet magazines 66, 68.

The pallet recycling device 16 have been described in connection to a truck trailer 2. However, pallet recycling device 16 is clearly suitable for other vehicles than truck trailers 2. For instance the pallet recycling device 16 may be arranged on a train or in a container.

## Claims

1. Pallet recycling device (16) comprising a pallet dismantler (78) having means (81, 82) for dismantling a pallet, and a multiple-axle robot (76) which is arranged to feed a pallet (20, 24) into and out of the pallet dismantler (16) and to position the pallet (20, 24) in relation to said means (81, 82) for dismantling a pallet, **characterized in that** the pallet recycling device (16) comprises a platform (44) for being arranged at a vehicle (1), wherein the platform (44) has a first end portion (46) and a second end portion (48), wherein the pallet dismantler (78) and the multiple-axle robot (76) are arranged at said first end portion (46) of the platform (44), and wherein pallet assembling equipments (94) are arranged at said second end portion (48) of the platform (44).

2. Pallet recycling device (16) according to claim 1, comprising an infeed path (54) for feeding pallets to the robot (76), wherein the infeed path (54) is arranged in said second end portion (48) of the platform (44).

3. Pallet recycling device (16) according to anyone of the preceding claims, comprising an outfeed path (62) for feeding dismantled pallets (20, 24) from the robot (76), wherein the outfeed path (62) is arranged in said second end portion (48) of the platform (44).

4. Pallet recycling device (16) according to claim 2 and 3, wherein at least a portion of the outfeed path (62) is arranged in parallel with the infeed path (54).

5. Pallet recycling device (16) according to anyone of claims 2 - 4,
wherein the infeed path (54) and outfeed path (62) are at least partially arranged vertically above each other.

6. Pallet recycling device (16) according to anyone claims 2 - 5,
wherein the infeed path (54) is arranged vertically below the outfeed path (62).

7. Pallet recycling device (16) according to anyone claims 2 - 6,
wherein a vertical level of at least one of the infeed path (54) and the outfeed path (62) is adjustable.

8. Pallet recycling device (16) according to anyone of the preceding claims, wherein the first end portion (46) is a front portion of the platform (44) and the second end portion (48) is a rear portion of the platform (44), as seen in a normal driving direction of the vehicle (1) when the platform (44) is arranged at the vehicle (1).

9. Pallet recycling device (16) according to anyone of the preceding claims, wherein said robot (76) is arranged to hold a pallet (20, 24) in a position for visual inspection of the pallet (20, 24) before the pallet (20, 24) is moved to the pallet dismantler (78).

10. Vehicle (1) comprising a pallet recycling device (16) according to anyone of the preceding claims.

11. Method for recycling pallets (20, 24) on a platform (44) arrangable on a vehicle (1), comprising
- feeding a pallet (20) along an infeed path on the platform;
- moving the pallet to a pallet dismantler on the platform;
- dismantling the pallet by means of the pallet dismantler;
- moving the pallet from the pallet dismantler to an assembling station, and;
- assembling the pallet at the assembling station.

12. Method according to claim 11, comprising
- arranging the pallet in an inspection position by means of a multi-axis robot; and
- inspecting the pallet to decide what pallet portions to be dismantled.

13. Method according to claim 11 or 12, comprising
- entering a pallet through a pallet inlet at the platform, wherein the pallet inlet is arranged in one end portion of the platform.

14. Method according to anyone of claims 11-13, comprising
- discharging a pallet through a pallet outlet arranged in one end portion of the platform.
